# EUROPEAN PATENT SPECIFICATION

(11) **EP 1 667 396 B1**
(45) Date of publication and mention of the grant of the patent: **09.04.2008**
(21) Application number: 04028568.6
(22) Date of filing: 02.12.2004
(51) Int. Cl.: H04L 29/06, G06F 1/00

(54) **Database system with second preprocessor and method for accessing a database**
Datenbanksystem mit zweitem Präprozessor und Verfahren für den Zugriff auf eine Datenbank
Base de données avec deuxième préprocesseur et procédé pour l'accès à une base de données

(43) Date of publication of application: 07.06.2006
(73) Proprietor: PROTEGRITY CORPORATION, KY-Grand Cayman (KY)
(72) Inventor: Mattsson, Ulf, US-Cos Cob CT-06807-2537 (US)
(74) Representative: Edlund, Fabian

(56) References cited:
- EP-A- 1 328 104
- WO-A-00/69112
- US-A1- 2004 059 912

## Description

### Technical field

The present invention relates to a database system comprising a database and a database management system for accessing the database, including a first preprocessor communicating with the database management system for receiving queries from a client application.

The invention also relates to a method for accessing a database with such a system.

### Technical background

When using encryption in a database environment, e.g. a server-application relation, the actual encryption/decryption can be accomplished on the database side or on the application side. Both alternatives have their advantages and disadvantages.

According to the first alternative, the data is encrypted as soon as it is stored in the database. Encryption is generally implemented within the database through a "database procedure call". Some vendors support limited encryption capabilities through database add-ons. Other vendors may only provide all-or-nothing support for encryption - either the entire database is encrypted, or nothing is.

The strongest argument in favor of encrypting data within the DBMS is that many applications are unaffected by the encryption, i.e. DBMS-based encryption can be implemented without making major changes in legacy applications, e-commerce applications, etc. However, this solution requires the use of encrypted communications between the database and your applications, if the data will be regarded at risk of exposure while in internal (transaction) transit. Otherwise, as any data that enters or leaves the database will be decrypted, it will be transported as clear text.

An inherent vulnerability of DBMS-based encryption is further that the encryption key used to encrypt data likely will be stored in a database table inside the database, protected by native DBMS access controls. Frequently, the users who can have access rights to the encrypted data also have access rights to the encryption key. This can create a security vulnerability because the encrypted text is not separated from the means to decrypt it.

Another major drawback with DBMS encryption toolkits is the extra processing load. Because encryption and decryption are performed within the database, the DBMS is asked to perform additional processing - not only when the data is stored, but each time it is accessed. Use of accelerated database indexes may reduce this problem.

According to the second alternative the data is encrypted/decrypted at application level. Moving the encryption to the applications that generate the data improves security.

However, this will require source code level changes to all involved applications and tools in order to handle the encryption decryption. It will also prevent some of the current database operations and data sharing between applications. Critical data may no longer be possible to share between different applications, even if the applications are re-written. This makes the alternative unsuitable for large scale implementation.

The distributed encryption also creates more communication overhead, and more server administration.

US 2004/059912 discloses an EDM server controlling an EDM database. An EDM client provides a workstation with an interface to the EDM server, and therefore allows access by a user at the workstation to the EDM database. A crypto server is functionally disposed between an application and the EDM client and intercepts or traps I/O request by the application.

WO 00/69112 discloses a database management system that accepts queries and responds to those queries with data from a database. The DBMS includes an I/O section, which handles queries and responses. The I/O section also handles the process of passing data through and encoder/decoder.

### Summary of the invention

An object of the present invention is to overcome some of the above problems, and to provide a data base encryption system allowing a balanced and optimized operation.

A further object of the invention is to provide end-2-end encryption for selective parts of the database.

These and further objects are achieved with a data base system and a method for accessing a database according to the appended claims.

According to an aspect of the invention, the objects are achieved by a system of the kind mentioned by way of introduction, further comprising a second preprocessor, provided functionally between the client application and the first preprocessor, for providing encryption/decryption of data, and a dispatcher, arranged to divide a query into sub-queries, and to dispatch each sub-query to one of said first and second preprocessor, in accordance with a selected level of encryption.

The second preprocessor allows for dynamic balancing of encryption outside and inside of the database system itself. The preprocessor off-loads some encryption processing operations to applications. This has two benefits. Firstly, it balances the computational overhead of cryptography between the DBMS and applications. Secondly, and perhaps even more importantly, it allows further separation of the crypto system, combined with a method to accommodate all required databases operations (including JOIN-operations, stored procedures, etc.).

It is important to note that the database itself is not involved in the described encryption/decryption. The queries forwarded to the database from the second preprocessor are open queries, i.e. the database treats them as completely non-encrypted. The entire encryption lies in the second preprocessor, and makes sure some tables in the database only contain encrypted data.

The encryption process in the second preprocessor can use encryption keys that are not exposed in database processes or application processes.

Further, administrator roles can be separated from database administrator roles and application administrator roles since the preprocessor process uses processes and data that is separated from information exposed in database processes and application processes.

The inventive preprocessor thus provides both encryption and decryption of any parts of the accessed database. This is a valuable feature for reducing the load of an encrypted database, but it can also be used to provide encryption/decryption of a database system not at all adapted to support such encryption/decryption. As such, this embodiment of the invention provides an easy implemented encryption/decryption system to any database. Encryption can be distributed to a large number of application servers and off-loaded from the fewer number of database servers.

The determination of which queries are to be encrypted/decrypted can be governed by a policy accessible to the preprocessor via e.g. a key management system. Depending on this policy, the amount of decryption performed by the preprocessor will vary. Thus, the inventive system is easily scalable to handle encryption/decryption of queries from many different applications. As the preprocessor may be connected to several DB servers, the solution is further scalable to include several databases.

The invention is not limited to two preprocessors, but can be extended to include any number of preprocessors.

The second preprocessor is preferably arranged to intercept a query from said application, and to parse said query before forwarding it to the dispatcher.

Preferably, the second preprocessor comprises means for parsing a query belonging to a predefined subset of queries. This makes it possible for the preprocessor to evaluate the intercepted query, and reduces the load of the proxy while improving the efficiency of the encryption/decryption.

In this case, the system can further comprise means for amending the recognized query to request encrypted information from the database, and forwarding the amended query to the database.

According to a preferred embodiment, the means for recognizing a DB query is arranged to recognize a subset of the Standard Query Language (SQL). The amendment can then include e.g. substituting the database table name, thereby indicating that an encrypted result is requested.

The first preprocessor and the second preprocessor can both be implemented in a database management system. Alternatively, the second preprocessor can be implemented in an intermediate server, arranged between the application and the database management system. The intermediate server can be a proxy server, and an SSL channel is preferably provided between the client and the intermediate server.

### Brief description of the drawings

These and other aspects of the present invention will be further described with reference to currently preferred embodiments illustrated in the appended drawings.

Fig 1 shows a schematic block diagram of a database system including a preprocessor according to the invention.

Fig 2 shows a flowchart of an embodiment of a method according to the invention, suitable to implement in the system in fig 1.

### Detailed description

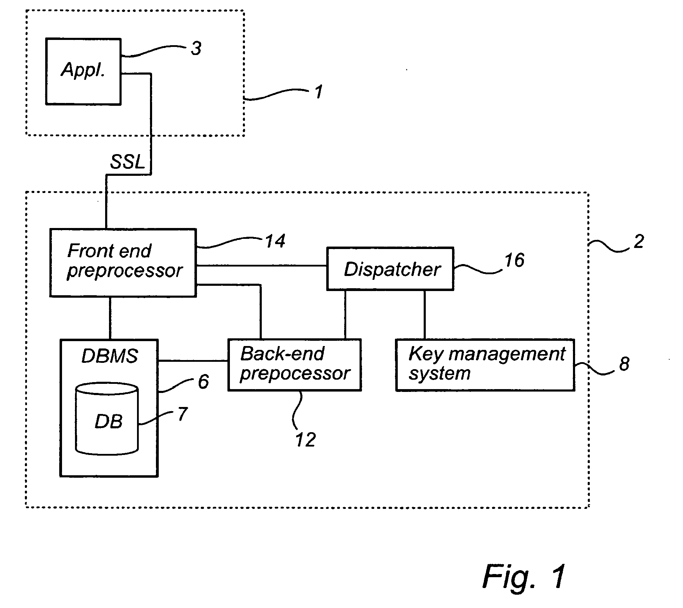

Figure 1 shows a database system environment, in which the invention has been implemented. The two dashed outlines 1 and 2 represent a client side and a server side, respectively. The client side 1 comprises a client application 3, while the server side 2 comprises a database management system 6 including a DB server (e.g. a Secure.Data™ from Protegrity Inc.), and a database 7. The server side also includes a key management system 8, including e.g. a security system (SS) (e.g. Secure.Server™ from Protegrity Inc.), a security administration system (SAS) (e.g. Secure.Manager™ from Protegrity Inc.) and a data security extension (DSE), e.g. of a kind also available from Protegrity Inc. The SAS is used by the administrator to manage a policy database 11, which is accessible from the key management system 8 to determine what actions (e.g. read or write to specific tables of the database 7) are permitted by an individual user.

The database system further comprises a first preprocessor 12, also referred to as a back-end preprocessor, adapted to receive queries from the application 3. The query processor is in communication with the DB server 6, and arranged to access information in the database. If the database 7 is encrypted, the back-end preprocessor is arranged to handle encryption/decryption.

Between the application 3 and the DB server is further arranged a second preprocessor 14, also referred to as a front-end preprocessor. This preprocessor is arranged to intercept any query sent from the application 3 to the back-end preprocessor 12. Preferably, the front-end preprocessor 14 is arranged to recognize a subset of the query language used, e.g. SQL. This recognized subset can include simple queries like: "select age from person" and "insert into person values ('john', 'smith', 34)". The front-end preprocessor is further be arranged to handle encryption/decryption, thus providing an alternative way to enable encryption of the database information.

Connected to both preprocessors 12, 14 and to the key management system 8 is a dispatcher 16, arranged to receive any query intercepted by the front-end preprocessor, and also arranged to select, based on information in the policy DB 11, which preprocessor to handle communication with the database 7. In making this selection, it is also determined which preprocessor will handle encryption/decryption.

The second preprocessor 14 can be implemented as a separate process in the DB system, or be implemented as an intermediate server, between the client and the server, e.g. a proxy server. The entire server side 2 with its various components may be integrated in one hardware unit, or distributed among several units.

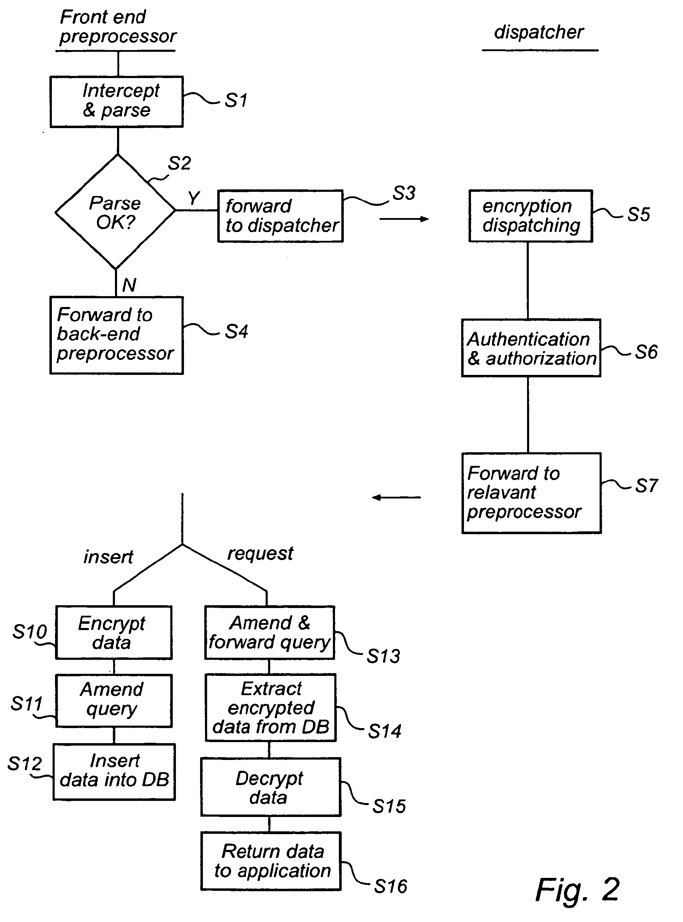

The function of the system in fig 1 will be described in more detail with reference to fig 2.

First, in step S1, the front-end preprocessor 14 intercepts a query sent to the database 7 from the client application 3, and parses this query (if possible). If parsing is successful (step S2), the query is forwarded to the dispatcher (step S3). In the illustrated example, with only two preprocessors, unrecognized queries are forwarded to the back-end preprocessor 12 (step S4). In a general case, with a plurality of preprocessors, the dispatcher will decide where to send a query that is not recognized by the front-end preprocessor.

The dispatcher will perform encryption dispatching (step S5), i.e. divide the query into sub-queries, relating to different portions, e.g. different columns, of the database. It is possible that different sub-queries are related to portions of the database 7 with different levels of security and/or encryption.

The dispatcher will then handle authentication and authorization of the user (step S6), by accessing the key management system 8. After authentication and authorization, the dispatcher will forward (step S7) each sub-query to the preprocessor 12, 14 that is indicated by the key management system to handle encryption of this particular portion of the database.

Sub-queries that are sent to the back-end preprocessor 12 will be handled with any encryption that is implemented in the database system 6. However, sub-queries that are sent to the front-end preprocessor 14 will be handled with additional encryption, thus enabling an increased level of encryption for selected parts of the database 7. As mentioned above, this additional encryption can be added to an existing database system, by providing the front-end preprocessor 14 and the dispatcher 16.

In case of an insert operation, the front-end preprocessor 14 encrypts the data in the query (step S10), amends the query (step S11) to include the encrypted data, and then forwards the query to the database, so that the table is updated with encrypted data (step 12).

In case of a request operation, the front-end preprocessor 14 can amend the query, and forward an amended query to the database 7 (step S13). The requested information is extracted from the database 7 (step S14) and is decrypted (step S14). The decrypted result is then returned to the client application 3 (step S15).

As an example, if the query "select age from person" is recognized and determined by the dispatcher to involve an encrypted table, the query can be changed to "select age from person_enc", implying that data is to be selected from an encrypted table in the database. When the encrypted data is received from the database 7, the preprocessor 14 decrypts the data, before it is sent to the client application 3 over the secure line.

In the same way, "insert into person 'john', 'smith', 34" can be amended to insert into person_enc, implying that the data is to be inserted into an encrypted table. At the same time, the preprocessor 14 performs encryption of the data fields in the query, so that the forwarded query will look like "insert into person_enc xxxxx xxxxx xx". This query will ensure that encrypted data is inserted into the database, without requiring any encryption by the DBMS 6.

As is clear from the above, the front-end preprocessor 14 will handle all encryption/decryption relating to selected tables. Therefore, it should be noted that in a case where the database is not itself adapted to handle encryption, the invention can on its own create an encrypted interface to the database, allowing for encryption/decryption of certain tables. What tables are to be encrypted will be governed by the contents in the policy database 11.

The inventive process differs from the conventional process in the way they communicate with the DB server 6. In the first case (query not recognized, or table not selected to be encrypted by module 12), any encryption/decryption and authentication must be performed inside the DB server 6, while in the second case (query recognized and table selected to be encrypted/decrypted by the module 12), encryption/decryption and authentication is performed outside the DB server 6, thereby facilitating verification of authentication before an encryption/decryption is performed on the specific protected data.

By defining the subset of queries that is recognized by the preprocessor 14, and by selecting a number of tables in the database to be included in a profile in the policy database, the user will be able to decide to what extent authentication and encryption/decryption should take place in the preprocessor 14.

Preferably the preprocessor 14 is an add-on to an existing database system, thereby offering maximum flexibility for the user.

The preprocessor 14 does not need to handle any SQL syntax errors, as any unrecognized queries (including incorrect queries) will simply be forwarded to the DBMS 6 (step S4 in fig 3) .

By including only simple queries in the subset, an embodiment of the invention is very easy to implement at a low cost. JOIN-operations do not have to be performed in the preprocessor, and complete tables do not have to be loaded into the preprocessor to do calculations. As normally a large portion of the queries asked are simple queries, such a low complexity implementation may provide satisfactory performance to a majority of users.

However, there is no technical reason not to include the entire SQL language in the subset, effectively allowing the table selection in the policy database 11 to determine what tables to encrypt/decrypt in the preprocessor 5.

The preprocessor 14 can support secure socket layer (SSL) with strong authentication, to enable an SSL channel between client and server. The certificate used for authentication can be matched to the database user entered, in order to provide strong authentication. In the case where the preprocessor 14 is comprised in the same process as the DBMS 6, the DBMS will thus have full control of the authentication process. However, it is also possible to implement the DBMS 6 and the preprocessor 14 separately, e.g. if the preprocessor 14 is implemented as an intermediate server.

It is clear that many modifications of the above described embodiment will be possible for the skilled person. Such modifications could relate to e.g. the details of the DBMS 6 and its components, or the specifics of the client server interface. For example, the preprocessor 14 can be implemented physically separate from the database server 2, in a different unit.

However, such modifications of the system does not depart from the inventive concept defined by the claims, and the above description is not intended to limit the claims in such a way.

## Claims

1. A database system comprising:
a database (7),
a database management system (6) for accessing the database (7),
a first preprocessor (12) communicating with the database management system (6) for receiving queries from a client application (3),
a second preprocessor (14), provided functionally between the client application and the first preprocessor (12), for providing encryption/decryption of data,
**characterized in that** said database system comprises a dispatcher (16), arranged to divide a query into sub-queries, and to dispatch each sub-query to one of said first and second preprocessor, in accordance with a selected level of encryption.

2. The system in claim 1, wherein said second preprocessor is adapted to encrypt data to be inserted into the database (7) and to insert said encrypted data directly into the database (7).

3. The system in claim 1, wherein said second preprocessor is adapted to request encrypted data from the database (7) and to decrypt said encrypted data.

4. The system in claim 1, wherein said second preprocessor (14) is arranged to intercept a query from said application (3), and to parse said query before forwarding it to the dispatcher (16).

5. A system according to claim 4, wherein the second preprocessor (14) comprises means for parsing a query belonging to a predefined subset of queries.

6. A system according to claim 5, said second preprocessor further including means for amending the query to request encrypted information from the database, and forwarding said amended query to the database.

7. A system according to claim 5, wherein said means for recognizing a database query is arranged to recognize a subset of the Standard Query Language (SQL).

8. A system according to claim 7, wherein the second preprocessor (14) further is provided with means (14) for amending the table name of a recognized SQL query.

9. The system in claim 1, wherein said first preprocessor (12) and said second preprocessor (14) both are implemented in a database management system(6).

10. The system in claim 1, wherein said second preprocessor (14) is implemented in an intermediate server, arranged between the application (3) and the database management system (6).

11. The system in claim 6, wherein said intermediate server is a proxy server.

## Patentansprüche

1. Datenbanksystem mit
einer Datenbank (7),
einem Datenbank-Managementsystem (6) für Zugriff auf die Datenbank (7),
einem ersten Präprozessor (12) in Kommunikation mit dem Datenbank-Managementsystem (6) zum Empfang von Suchanfragen von einer Client-Anwendung (3),
einem zweiten Präprozessor (14), der funktionell zwischen der Client-Anwendung und dem ersten Präprozessor (12) zur Verfügung steht, um Datenver- und Entschlüsselung zu liefern,
**dadurch gekennzeichnet, dass** das Datenbanksystem einen Dispatcher (16) umfasst, der so eingerichtet ist, dass er eine Suchanfrage in Teilsuchanfragen unterteilt und jede Teilsuchanfrage in Übereinstimmung mit einer gewählten Verschlüsselungstiefe an den ersten oder zweiten Präprozessor schickt.

2. System nach Anspruch 1, **dadurch gekennzeichnet, dass** der zweite Präprozessor dazu angepasst ist, in die Datenbank (7) einzufügende Daten zu verschlüsseln und die verschlüsselten Daten direkt in die Datenbank (7) einzufügen.

3. System nach Anspruch 1, **dadurch gekennzeichnet, dass** der zweite Präprozessor dazu angepasst ist, verschlüsselte Daten von der Datenbank (7) anzufordern und die verschlüsselten Daten zu entschlüsseln.

4. System nach Anspruch 1, **dadurch gekennzeichnet, dass** der zweite Präprozessor (14) dafür eingerichtet ist, eine Suchanfrage von der Anwendung (3) abzufangen und diese Suchanfrage zu parsen, ehe er sie an den Dispatcher (16) weiterleitet.

5. System nach Anspruch 4, **dadurch gekennzeichnet, dass** der zweite Präprozessor (14) Mittel umfasst, um eine Suchanfrage zu parsen, die zu einer im Voraus definierten Teilmenge von Suchanfragen gehört.

6. System nach Anspruch 5, wobei der zweite Präprozessor weiter Mittel beinhaltet, um die Suchanfrage zu ergänzen, verschlüsselte Daten von der Datenbank anzufordern und die ergänzte Suchanfrage an die Datenbank weiterzuleiten.

7. System nach Anspruch 5, **dadurch gekennzeichnet, dass** die Mittel, eine Datenbank-Suchanfrage zu erkennen, so eingerichtet sind, dass eine Teilmenge der Standardabfragesprache (SQL) erkannt wird.

8. System nach Anspruch 7, **dadurch gekennzeichnet, dass** der zweite Präprozessor (14) weiter mit Mitteln (14) versehen ist, um den Tabellennamen einer erkannten SQL-Suchanfrage zu ergänzen.

9. System nach Anspruch 1, **dadurch gekennzeichnet, dass** der erste Präprozessor (12) und der zweite Präprozessor (14) beide in einem Datenbank-Managementsystem (6) implementiert sind.

10. System nach Anspruch 1, **dadurch gekennzeichnet, dass** der zweite Präprozessor (14) in einem Zwischenserver implementiert ist, der zwischen der Anwendung (3) und dem Datenbank-Managementsystem (6) eingerichtet ist.

11. System nach Anspruch 6, **dadurch gekennzeichnet, dass** der Zwischenserver ein Proxy-Server ist.

## Revendications

1. Système de base de données comprenant:
une base de données (7),
un système de gestion de base de données (6) pour accéder à la base de données (7),
un premier préprocesseur (12) communiquant avec le système de gestion de base de données (6) pour recevoir des requêtes d'une application client (3),
un deuxième préprocesseur (14), fonctionnellement pourvu entre l'application client et le premier préprocesseur (12), pour fournir un cryptage/décryptage de données,
**caractérisé en ce que** ledit système de base de données comprend un répartiteur (16), agencé afin de diviser une requête en sous-requêtes, et pour répartir chaque sous-requête à l'un desdits premier et deuxième préprocesseurs, en accord avec un niveau sélectionné de cryptage.

2. Système de la revendication 1, dans lequel ledit deuxième préprocesseur est adapté pour crypter des données devant être insérées dans la base de données (7) et pour insérer lesdites données cryptées directement dans la base de données (7).

3. Système de la revendication 1, dans lequel ledit deuxième préprocesseur est adapté pour demander des données cryptées de la base de données (7) et pour décrypter lesdites données cryptées.

4. Système de la revendication 1, dans lequel ledit deuxième préprocesseur (14) est agencé afin d'intercepter une requête de ladite application (3), et pour analyser ladite requête avant de l'expédier au répartiteur (16).

5. Système selon la revendication 4, dans lequel le deuxième préprocesseur (14) comprend un moyen pour analyser une requête appartenant à un sous-ensemble prédéfini de requêtes.

6. Système selon la revendication 5, ledit deuxième préprocesseur incluant en plus un moyen visant à modifier la requête pour demander des informations cryptées de la base de données, et expédier ladite requête modifiée à la base de données.

7. Système selon la revendication 5, dans lequel ledit moyen visant à reconnaître une requête de base de données est agencé de sorte à reconnaître un sous-ensemble du Langage d'Interrogation Standard (SQL).

8. Système selon la revendication 7, dans lequel le deuxième préprocesseur (14) est en plus pourvu d'un moyen (14) pour modifier le nom de table d'une requête SQL reconnue.

9. Système de la revendication 1, dans lequel ledit premier préprocesseur (12) et ledit deuxième préprocesseur (14) sont tous deux mis en oeuvre dans un système de gestion de base de données (6).

10. Système de la revendication 1, dans lequel ledit deuxième préprocesseur (14) est mis en oeuvre dans un serveur intermédiaire, agencé entre l'application (3) et le système de gestion de base de données (6).

11. Système de la revendication 6, dans lequel ledit serveur intermédiaire est un serveur mandataire.
